# EUROPEAN PATENT APPLICATION

(11) **EP 3 512 032 A1**
(43) Date of publication of application: **17.07.2019**
(21) Application number: 17848790.6
(22) Date of filing: 06.09.2017
(51) Int. Cl.: H01M 10/6554, H01M 10/613, H01M 10/625

(54) **BATTERY UNIT AND VEHICULAR STORAGE BATTERY DEVICE**

(30) Priority: 12.09.2016 WO PCT/JP2016/076797
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: KANAYAMA Yohsuke, Kawasaki-shi Kanagawa 212-8585 (JP); KAMIJO Mototsugu, Kawasaki-shi Kanagawa 212-8585 (JP)
(74) Representative: AWA Sweden AB
(86) International application number: PCT/JP2017/032076
(87) International publication number: WO 2018/047851

(57) **Abstract**

A battery unit according to an embodiment includes a plate-shaped heat radiation member, a plate-shaped heat transfer member, first battery modules, second battery modules, a first bracket, a first support member, a second support member, and fastening member insertion portions. The fastening member insertion portions are provided respectively on a first side portion of the first support member on a side opposite to the heat transfer member and a second side portion of the second support member on a side opposite to the heat transfer member, are provided to extend in the same direction as the extending direction of the heat transfer member, and have first through holes penetrating in the extending direction, respectively. Also, the heat radiation member has second through holes formed to penetrate in a thickness direction thereof and communicate with the first through holes at positions corresponding to the first through holes of the fastening member insertion portions. Also, fastening members are inserted through the first through hole and the second through hole, respectively, whereby the heat radiation member and the fastening member insertion portions are fixed to the heat radiating portion.

## Description

### FIELD

Embodiments of the present invention relate to a battery unit and a vehicle storage battery device.

### BACKGROUND

Conventionally, a vehicle storage battery device is installed in an electric locomotive traveling in a non-electrified section. This type of vehicle storage battery device stores electric power as power when an electric locomotive travels in a non-electrified section. In a vehicle storage battery device, since cells in a battery generate heat as charging and discharging are repeated, they are cooled during use.

Meanwhile, in recent years, there has been a demand for larger capacity and higher output of a vehicle storage battery device. In order to increase the capacity, it is conceivable to increase the number of cells. On the other hand, in a vehicle storage battery device, since there are many constraints on arrangement space due to the low flooring of an electric locomotive and the like, it is necessary to arrange a plurality of cells with a high density.

As one means therefor, for example, there is a vehicle storage battery device including a plurality of batteries, a plurality of heat sinks each thermally connected to one surface of a battery at one end thereof and protruding from the battery at the other end thereof, a plurality of metallic heat transfer plates each thermally connected to one surface of a battery, a plurality of heat radiating portions each provided at the other end of a heat sink, and an air blower which sends wind to the plurality of heat radiating portions.

By the way, since the amount of heat generated per unit volume increases when a plurality of cells are arranged with a high density, there is a possibility of the cooling capacity of the cell being insufficient.

In addition, since the heat transfer plate or the like is deformed due to the weight of the battery and the contact of each portion becomes insufficient, there is a possibility of heat not being efficiently transferred to the heat radiating portions.

### PRIOR ART DOCUMENTS

### PATENT DOCUMENTS

[PATENT DOCUMENT 1] Japanese Unexamined Patent Application, First Publication No. 2016-62705
[PATENT DOCUMENT 2] PCT International Publication No. WO2015/041149

### SUMMARY

### PROBLEMS TO BE SOLVED BY THE INVENTION

It is an object to be achieved by the present invention to provide a battery unit and a vehicle storage battery device which can provide a larger capacity while securing the cooling capacity and can increase the cooling efficiency.

### MEANS FOR SOLVING THE PROBLEMS

A battery unit according to an embodiment includes a plate-shaped heat radiation member, a plate-shaped heat transfer member, first battery modules, second battery modules, a first bracket, a first support member, a second support member, and fastening member insertion portions. One surface of the heat radiation member is attached to a heat radiating portion. The heat transfer member has one end provided to come into contact with the other surface of the heat radiation member, is provided to extend in a direction intersecting a surface direction of the heat radiation member, and has a first opposing surface and a second opposing surface that are opposite to each other. The first battery modules have first side surfaces which contact the first opposing surface of the heat transfer member. The second battery modules have second side surfaces which contact the second opposing surface of the heat transfer member. The first bracket connects the other end opposite to the one end of the heat transfer member, first end faces of the first battery modules facing the same direction as the other end of the heat transfer member, and second end faces of the second battery modules facing the same direction as the first end faces of the first battery modules. The first support member connects a third side surface of the heat transfer member which is different from the first opposing surface, the second opposing surface, the one end, and the other end of the heat transfer member, and a fourth side surface the first battery modules facing the same direction as the third side surface. The second support member connects the third side surface of the heat transfer member and a fifth side surface of the second battery modules facing the same direction as the third side surface. The fastening member insertion portions are provided on a first side portion of the first support member on a side opposite to the heat transfer member and a second side portion of the second support member on a side opposite to the heat transfer member, are provided to extend in the same direction as the extending direction of the heat transfer member, and have first through holes penetrating in the extending direction. In addition, the heat radiation member has second through holes formed to penetrate in a thickness direction thereof and communicate with the first through holes at positions corresponding to the first through holes of the fastening member insertion portions. Also, fastening members are inserted through the first through holes and the second through holes, whereby the heat radiation member and the fastening member insertion portions are fixed to the heat radiation portion.

### BRIEF DESCRIPTION OF THE DRAWINGS

FIG. 1 is a schematic side view of an electric locomotive according to a first embodiment.
FIG. 2 is a perspective view of a vehicle storage battery device according to the first embodiment.
FIG. 3 is a bottom view of the vehicle storage battery device according to the first embodiment.
FIG. 4 is a schematic view showing a cross-section taken along the line IV-IV of FIG. 2.
FIG. 5 is a perspective view of a partition member according to the first embodiment.
FIG. 6 is a partially broken side view in a direction of the arrow VI of FIG. 2.
FIG. 7 is a partially broken side view in a direction of the arrow VII of FIG. 2.
FIG. 8 is a perspective view of a battery unit according to the first embodiment.
FIG. 9 is an exploded perspective view of the battery unit according to the first embodiment.
FIG. 10 is a perspective view of the vehicle storage battery device according to the first embodiment.
FIG. 11 is a diagram for explaining an assembling method of the vehicle storage battery device according to the first embodiment.
FIG. 12 is a schematic side view of an electric locomotive according to a second embodiment.

### DETAILED DESCRIPTION

Hereinafter, a battery unit and a vehicle storage battery device according to an embodiment will be described with reference to the drawings.

### (First embodiment)

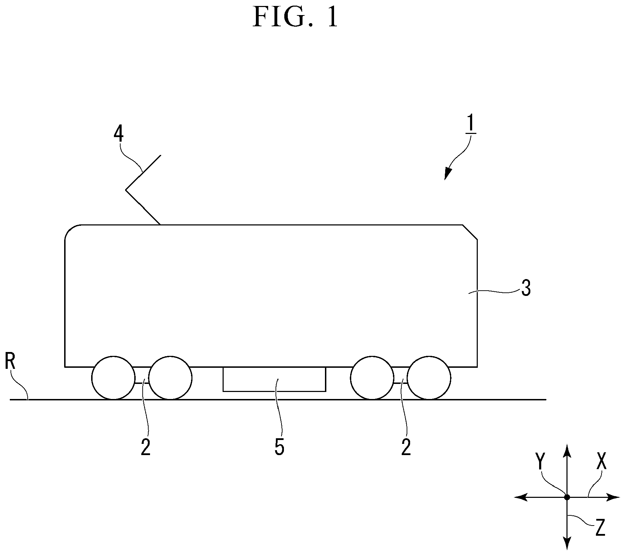

FIG. 1 is a schematic side view of an electric locomotive according to a first embodiment.

As shown in FIG. 1, the electric locomotive 1 includes a bogie 2 traveling on a rail R, a vehicle body 3 supported by the bogie 2, a pantograph 4 provided on the top of the vehicle body 3, and a vehicle storage battery device 5 disposed under the floor of the vehicle body 3. The bogie 2 includes a main electric motor (not shown). The main electric motor drives wheels using electric power supplied from an overhead line through the pantograph 4 or electric power supplied from the vehicle storage battery device 5. In addition, in the following description, a vehicle traveling direction is denoted by a reference sign X, a vehicle width direction orthogonal to the vehicle traveling direction X is denoted by a reference sign Y, and a vehicle height direction orthogonal to the vehicle traveling direction X and the vehicle width direction Y is denoted by a reference sign Z. Also, in the following description, a rail R side in the vehicle height direction Z is a direction from the vehicle body 3 toward the rail R in the vehicle height direction Z. Also, a vehicle body 3 side in the vehicle height direction Z is a direction from the rail R toward the vehicle body 3 in the vehicle height direction Z.

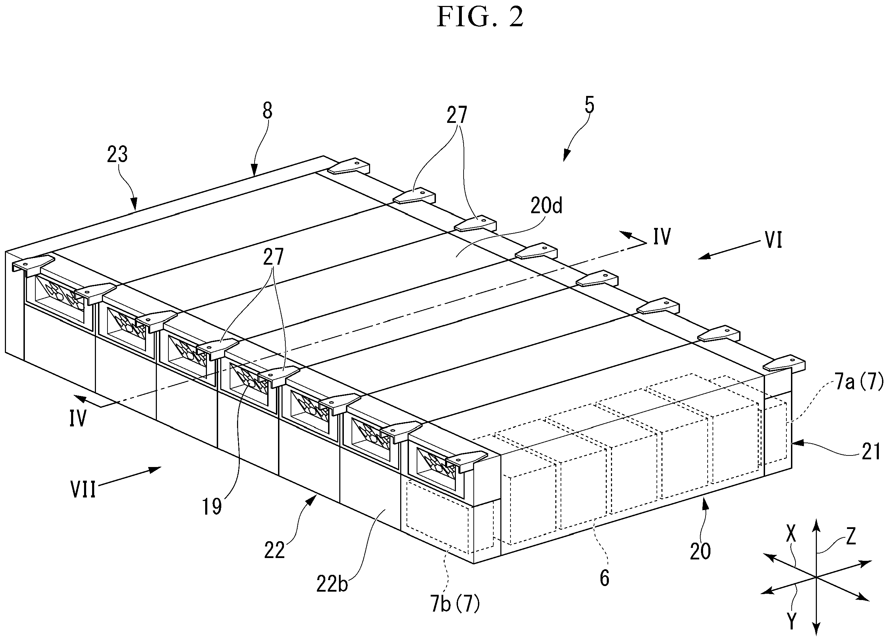

FIG. 2 is a perspective view of the vehicle storage battery device according to the first embodiment from the vehicle body side in the vehicle height direction Z. As shown in FIG. 2, the vehicle storage battery device 5 includes a plurality of battery units 6 including cells that are not shown, a control device 7 for controlling the battery units 6, and a housing 8 for holding the battery units 6 and the control device 7. The control device 7 includes a high-voltage device 7a and a low-voltage device 7b.

The housing 8 is formed as a rectangular parallelepiped extending in the vehicle traveling direction X, the vehicle width direction Y, and the vehicle height direction Z. A longitudinal direction of the housing 8 is fixed to the vehicle body 3 to coincide with the vehicle traveling direction X. The housing 8 includes a main body portion 20 formed in a rectangular parallelepiped box shape provided in a central portion of the housing 8, a high-voltage device accommodating portion 21 provided on one side in the vehicle width direction Y of the main body portion 20, a low-voltage device accommodating portion 22 provided on the other side in the vehicle width direction Y of the main body portion 20, and an outfitting connector accommodating portion 23 provided on one side in the vehicle traveling direction X of the main body portion 20.

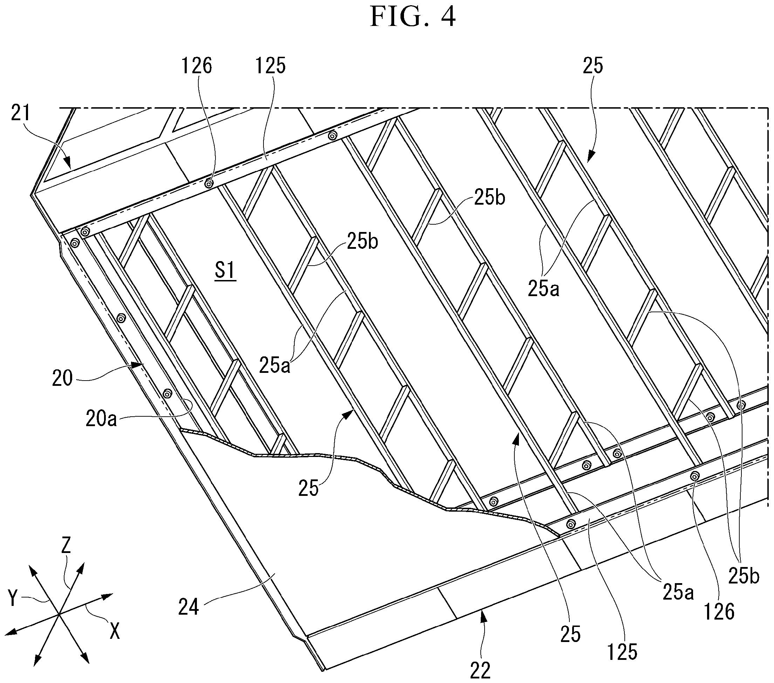

In the housing 8, a plurality of hanging ears 27 are provided to project toward both sides in the vehicle width direction Y. The hanging ears 27 are arranged side by side along both side edges in the vehicle width direction Y of a top plate of the housing 8. The hanging ears 27 are disposed at the same positions in the vehicle traveling direction X, for example, as those of a plurality of frames 25 (see FIG. 4). The housing 8 is suspended from the vehicle body 3 by fastening the hanging ears 27 under the floor of the vehicle body 3 (see FIG. 1).

The main body portion 20 accommodates the battery units 6. Atop plate 20d of the main body portion 20 is detachably provided. The top plate 20d is divided into a plurality of plates (seven in the present embodiment) in the vehicle traveling direction X by a plurality of division lines in the vehicle width direction Y.

The outfitting connector accommodating portion 23 is formed in a rectangular parallelepiped shape having long sides extending in the vehicle width direction Y. The outfitting connector accommodating portion 23 is disposed along one side portion of the main body portion 20 in the vehicle traveling direction X. The inside of the outfitting connector accommodating portion 23 is an outfitting connector space in which connectors for connecting the vehicle storage battery device 5 to other devices are arranged.

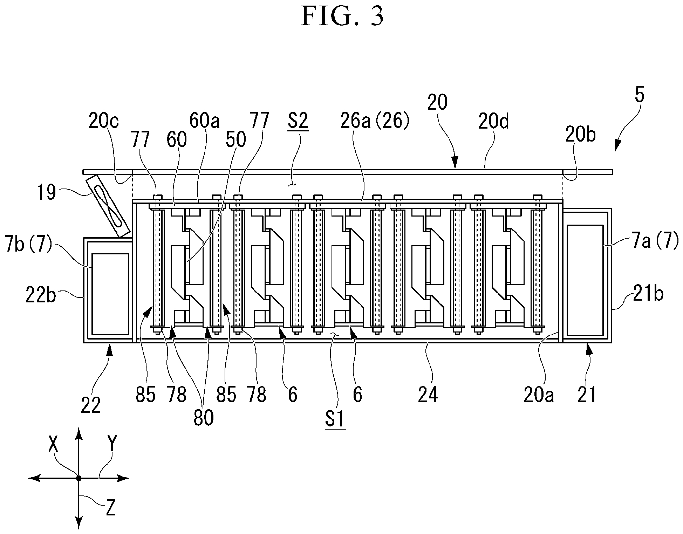

FIG. 3 is a schematic view showing a cross-section taken along the line IV-IV of FIG. 2.

As shown in FIG. 3, a partition member 26 which partitions an internal space of the main body portion 20 into the vehicle body 3 side and the rail R side in the vehicle height direction Z to make them independent from each other, battery units 6, and a plurality of fans 19 are provided inside the main body portion 20. In addition, the high-voltage device accommodating portion 21 is disposed along one side portion of the main body portion 20 in the vehicle width direction Y, and the low-voltage device accommodating portion 22 is disposed along the other side portion of the main body portion 20 in the vehicle width direction Y.

The inside of the main body portion 20 is partitioned by the partition member 26 into a cooling space S2 positioned in the vehicle height direction Z and an accommodating space S1 positioned on the rail R side in the vehicle height direction Z.

The cooling space S2 is for cooling the battery units 6 and communicates with an external space through ventilation openings 20b and 20c formed on both side portions in the vehicle width direction Y of the main body portion 20. The respective ventilation openings 20b and 20c extend over substantially the entire vehicle traveling direction X on both side portions in the vehicle width direction Y of the main body portion 20. In the ventilation opening 20c on the other side in the vehicle width direction Y, a plurality of fans 19 for sending outside air from the external space toward the cooling space S2 are provided side by side in the vehicle traveling direction X.

The accommodating space S1 is for disposing a plurality of battery units 6 and is separated from the external space by a cover member 24 provided on a side opposite to the cooling space S2 with the accommodating space S1 interposed therebetween and by side walls on both sides in the vehicle width direction Y of the main body portion 20. Further, the accommodating space S1 is formed to be openable on a side opposite to the partition member 26 with the battery units 6 interposed therebetween.

The battery unit 6 provided in the accommodating space S1 is fixed to the partition member 26 with a heat radiating surface 60a of a heat radiation member 60 in contact with a main surface of a base portion 26a of the partition member 26 on the rail R side. The battery unit 6 is fixed to the partition member 26 by inserting an elongated bolt 77 extending downward from the partition member 26 to pass through a fastening member insertion portion 85 and fastening the rail R side end portion of the elongated bolt 77 with the nut 78. For this reason, a heat transfer member 50 of the battery unit 6 is formed in a shape that is vertically suspended from the heat radiation member 60. Since a bolt guide portion 82 (the fastening member insertion portion 85) provided in a support member 80 also extends in the z direction, it is formed in a shape extending in the same direction as the vertically suspended direction of the heat transfer member 50.

The elongated bolt 77 is inserted through a through hole 60d formed in a corner portion of the heat radiation member 60. The fastening member insertion portion 85 is in contact with the heat radiation member 60 from the rail R side. The fastening member insertion portion 85 and the heat radiation member 60 are fastened together by the elongated bolt 77 and the nut 78.

Here, the heat transfer member 50 is fastened and fixed to the heat radiation member 60 using bolts 74. In addition, a first bracket 71 is fastened and fixed to the heat transfer member 50 using bolts 72. Further, each support member 80 is fastened and fixed to the heat transfer member 50 using bolts 75a. Also, battery modules 30 are supported on the heat transfer member 50 via the first bracket 71, the support member 80, and the bolts 72 and 75b. Also, second brackets 91 attached to the battery module 30 are attached to the support members 80 which support the battery module 30 using bolts 75b. Further, each bolt guide portion 82 (the fastening member insertion portion 85) provided in the support member 80 is supported on the partition member 26 using the elongated bolt 77 and the nut 78 together with the heat radiation member 60.

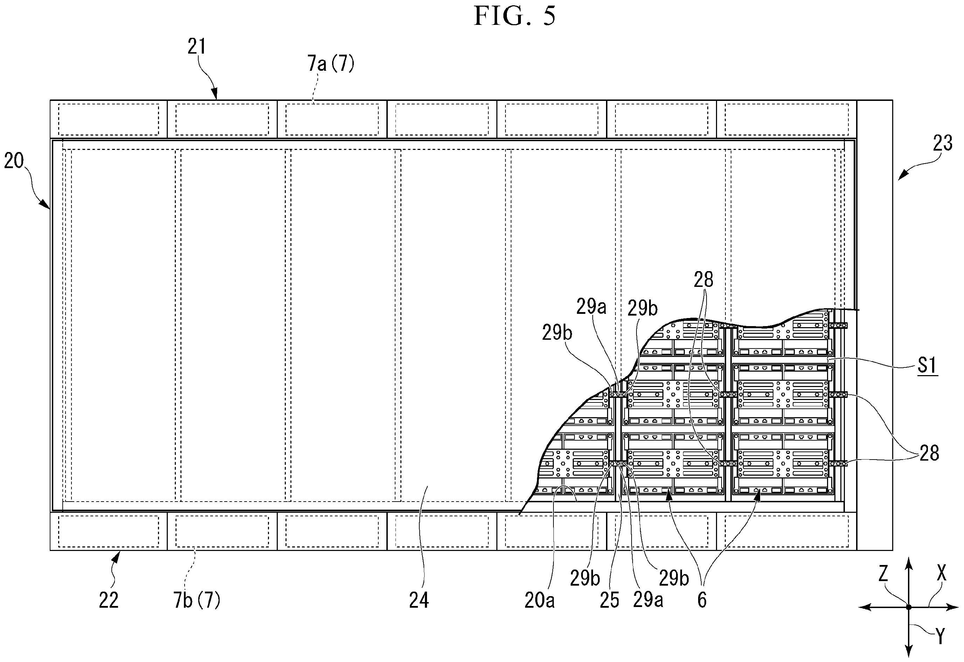

In this way, the two first battery modules 30 and the two second battery modules 30 are securely integrated with each other using the first bracket 71 and the second brackets 91. In addition, the load of the battery module 30 is received by the first bracket 71, the second brackets 91 and the support member 80. The load is further distributed to the heat transfer member 50, received by second brackets 28 and bolts 29b which will be described later, and received by frames 25 (see FIG. 4) which will be described later, through bolts 29a (see FIG. 5) which will be described later. For this reason, it is possible to secure the fastening rigidity by using the elongated bolt 77 and the nut 78 without concentrating the load on the heat radiation member 60 fastened together with the support member 80.

FIG. 4 is a perspective view of the main body portion from the rail side.

As shown in FIG. 4, the main body portion 20 has a working opening 20a which opens to the rail R side in the vehicle height direction Z. The working opening 20a is covered with a cover member 24 which is detachably provided. With the cover member 24 removed, the accommodating space S1 can be accessed from the external space through the working opening 20a.

A plurality of ladder-shaped frames 25 (eight in the present embodiment) are disposed in the accommodating space S1 of the main body portion 20. More specifically, the frame 25 has a pair of lateral frames 25a which extend in the vehicle width direction Y and are disposed at both ends in the vehicle height direction Z in the accommodating space S1, and a plurality of vertical frames 25b which extend in the vehicle height direction Z to extend between the pair of lateral frames 25a. The plurality of vertical frames 25b are arranged at regular intervals in the vehicle width direction Y. The frames 25 configured as described above are arranged at equal intervals in the vehicle traveling direction X. In addition, both ends of each lateral frame 25a in the vehicle width direction Y are fastened and fixed to connecting frames 125 joined to both side walls of the main body portion 20 in the vehicle width direction Y using bolts 126.

FIG. 5 is a bottom view of the vehicle storage battery device according to the first embodiment.

As shown in FIG. 5, a plurality of (five in the present embodiment) battery units 6 are arranged side by side in the vehicle width direction Y between adjacent frames 25 in the accommodating space S1. In addition, the battery unit 6 is connected to the frames 25 via second brackets 28.

The second bracket 28 is a metal fixture extending in the vehicle traveling direction X and is disposed to straddle an end portion of the frame 25 on the rail R side. The second bracket 28 is fastened to the lateral frame 25a of the frame 25 using a bolt 29a inserted from the rail R side at a center portion thereof. Further, both end portions of the second bracket 28 are fastened to end portions of battery units 6 in the x direction using bolts 29b inserted from the rail R side.

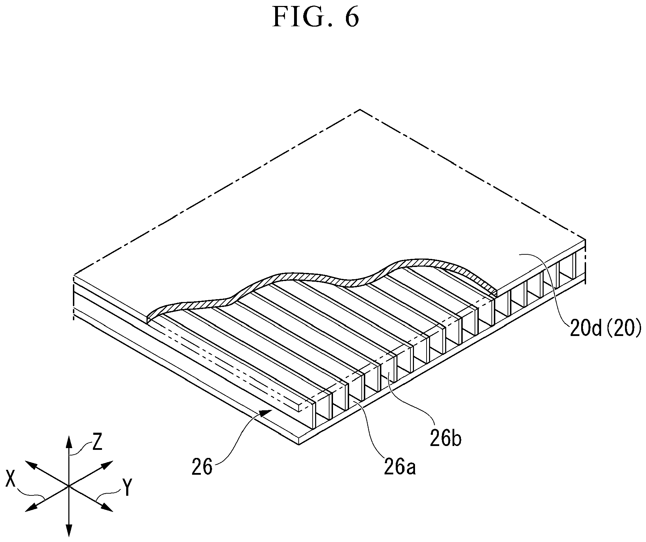

FIG. 6 is a perspective view of a partition member according to the first embodiment.

As shown in FIG. 6, the partition member 26 has a base portion 26a extending in the vehicle traveling direction X and the vehicle width direction Y, and a plurality of fins 26b which project in the vehicle height direction Z from the base portion 26a toward the vehicle body 3 and extend in the vehicle width direction Y. A tip portion of each fin 26b closely faces the top plate 20d of the main body portion 20. As a result, the plurality of fins 26b of the partition member 26 are disposed in the cooling space S2.

Further, similarly to the top plate 20d of the main body portion 20 (see FIG. 2), the partition member 26 is divided into a plurality (seven in the present embodiment) in the vehicle traveling direction X by a plurality of division lines formed in the vehicle width direction Y.

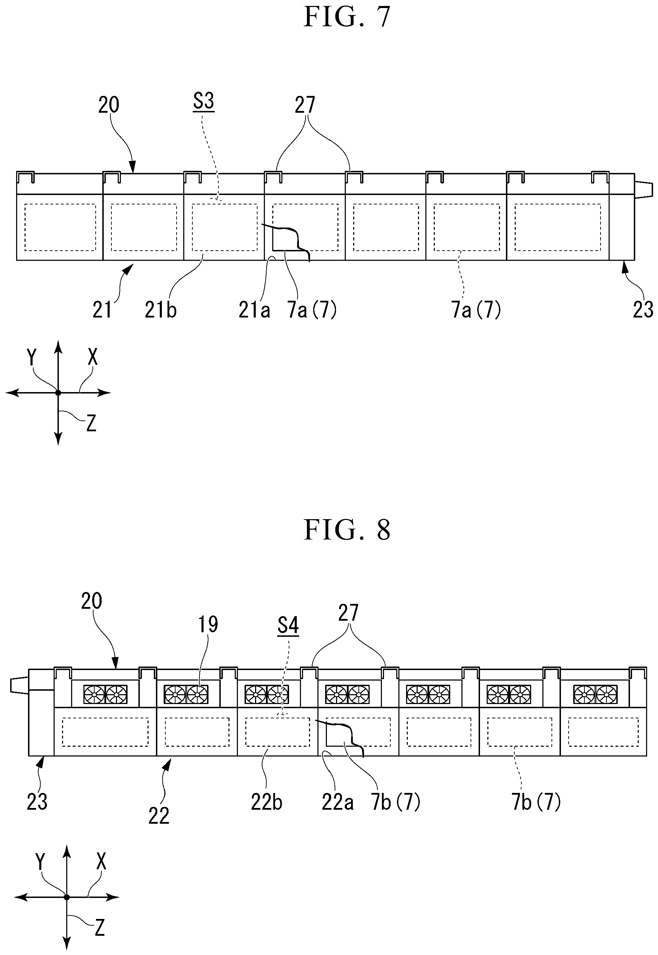

FIG. 7 is a partially broken side view in a direction of the arrow VI of FIG. 2.

As shown in FIG. 7, the high-voltage device accommodating portion 21 accommodates high-voltage devices 7a including fuses, contactors, and the like. The high-voltage device accommodating portion 21 is formed in a rectangular parallelepiped shape having long sides in the vehicle traveling direction X. The high-voltage device accommodating portion 21 is disposed along one side portion of the main body portion 20 in the vehicle width direction Y. The high-voltage device accommodating portion 21 has openings 21a which open outward in the vehicle width direction Y. The plurality of openings 21a are formed side by side in the vehicle traveling direction X. Each of the openings 21a is covered with a cover 21b which is detachably provided. The inside of the high-voltage device accommodating portion 21 is a high-voltage device space S3 (a control device space) in which high-voltage devices 7a are disposed. This high-voltage device space S3 is independently separated from the accommodating space S1 by a side wall of the main body portion 20 on one side in the vehicle width direction Y.

FIG. 8 is a partially broken side view in a direction of the arrow VII of FIG. 2.

As shown in FIG. 8, the low-voltage device accommodating portion 22 accommodates low-voltage devices 7b including, for example, a battery management unit and the like. The low-voltage device accommodating portion 22 is formed in a rectangular parallelepiped shape having long sides in the vehicle traveling direction X. The low-voltage device accommodating portion 22 is disposed along the other side portion of the main body portion 20 in the vehicle width direction Y. The low-voltage device accommodating portion 22 has openings 22a which open outward in the vehicle width direction Y. The plurality of openings 22a are formed side by side in the vehicle traveling direction X. Each of the openings 22a is covered with a cover 22b which is detachably provided. The inside of the low-voltage device accommodating portion 22 is a low-voltage device space S4 (a control device space) in which low-voltage devices 7b are disposed. The low-voltage device space S4 is a space separated from the high-voltage device space S3 (see FIG. 7) and is positioned on a side opposite to the high-voltage device space S3 with the vehicle traveling direction X interposed therebetween. In addition, the low-voltage device space S4 is independently separated from the accommodating space S1 by a side wall of the main body portion 20 on the other side in the vehicle width direction Y.

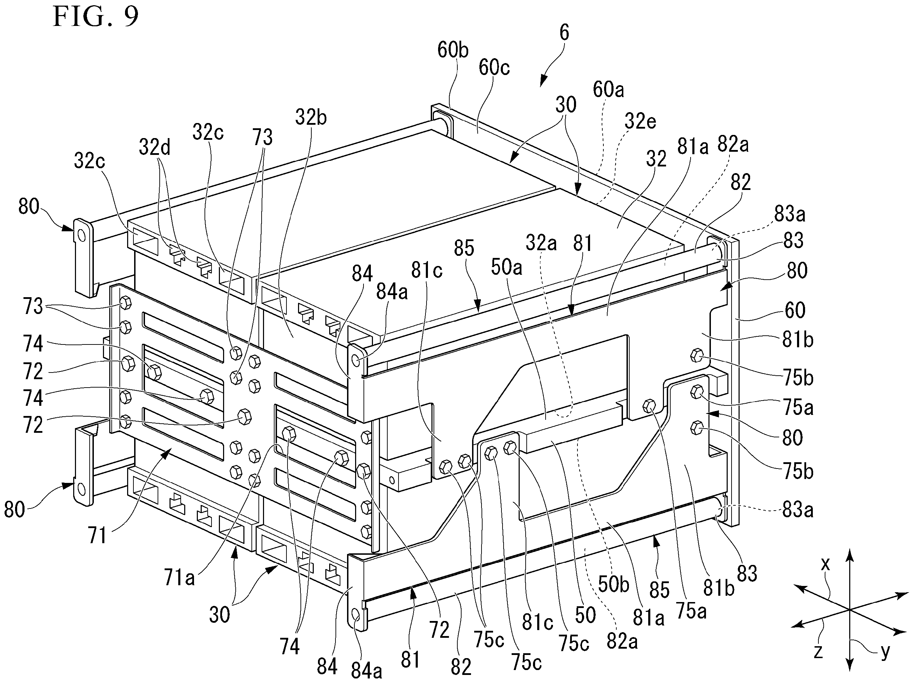

FIG. 9 is a perspective view of the battery unit according to the first embodiment.

As shown in FIG. 9, the battery unit 6 mainly includes a plurality of (four in the present embodiment) battery modules 30, a heat transfer member 50, a heat radiation member 60, a first bracket 71 (bracket), and a plurality of (four in the present embodiment) support members 80.

The battery module 30 has a plurality of cells (not shown) and an accommodating body (a case) 32 for accommodating the plurality of cells therein.

The cells are secondary batteries formed in rectangular parallelepiped shapes. Each cell is arranged side by side with its top surface provided with a plus terminal and a minus terminal facing in the same direction. The cells are connected in series to each other, for example, to constitute a battery pack.

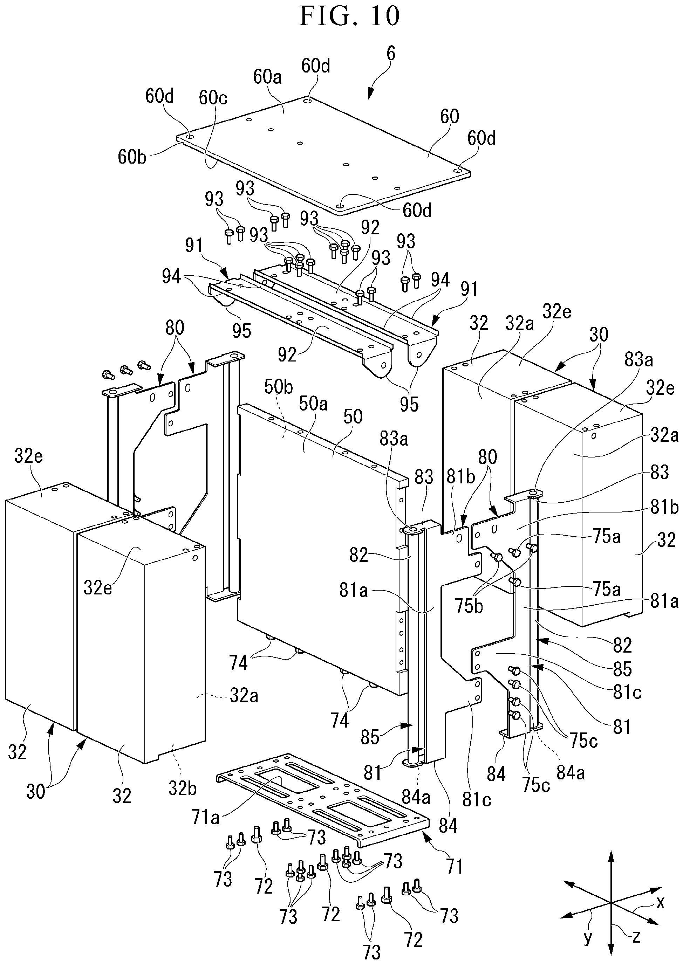

FIG. 10 is an exploded perspective view of the battery unit according to the first embodiment.

As shown in FIG. 10, the accommodating body 32 is made of, for example, a resin material or the like. The accommodating body 32 is formed in a rectangular parallelepiped shape that is elongated in a predetermined direction. The accommodating body 32 has a bottom wall 32a with which all of the plurality of cells accommodated inside the accommodating body 32 are in thermal contact, and four side walls connected to the bottom wall 32a. The bottom wall 32a extends in the longitudinal direction of the accommodating body 32. A bottom surface facing a side opposite to the top surface provided with the plus terminal and the minus terminal of each cell is in thermal contact with an inner surface of the bottom wall 32a. For example, an adhesive, a grease or the like is interposed between the inner surface of the bottom wall 32a and the bottom surface of each cell. In the following description, a direction from the bottom surface toward the top surface of the cell (that is, the normal direction of the bottom wall 32a) is defined as the y direction, a longitudinal direction of the bottom wall 32a when viewed in the y direction is defined as the z direction, and a direction orthogonal to the z direction and the y direction is defined as the x direction.

Among the four side walls of the accommodating body 32, on a first side wall 32b positioned at an end portion on one side in the z direction, there are provided a main circuit connector 32c (a connecting portion) electrically connected to a main circuit (an external device), and a control circuit connector 32d (a connecting portion) electrically connected to a control circuit (an external device). Each of the connectors 32c and 32d is formed to be visible from a side opposite to the heat radiation member 60 in the z direction. Each of the connectors 32c and 32d is provided on an end portion of the first side wall 32b on a side opposite to a connection site connected to the bottom wall 32a. For example, connectors (not shown) of cables extending from the main circuit and the control circuit are fixed to the connectors 32c and 32d, for example, by snap-fitting. Further, predetermined battery modules 30 are electrically connected to each other via jumper cables (not shown). Also, in this case, connectors (not shown) of the jumper cables are fixed to the predetermined connectors 32c and 32d, for example, by snap-fitting.

The four battery modules 30 are arranged in a grid pattern in both the x direction and the y direction. Each battery module 30 is disposed to face an outer surface of the bottom wall 32a of the accommodating body 32 with respect to the battery module 30 adjacent in the y direction with the heat transfer member 50 therebetween, which will be described later. In addition, each battery module 30 is disposed with a slight gap with respect to the battery module 30 adjacent in the x direction. In the following description, among the four battery modules 30, a pair of battery modules 30 disposed on one side in the y direction are referred to as first battery modules 30. Also, among the four battery modules 30, a pair of battery modules 30 disposed on the other side in the y direction are referred to as second battery modules 30.

The heat transfer member 50 is made of a material having high thermal conductivity. As a material having a high thermal conductivity, a metal material such as aluminum is preferable. The heat transfer member 50 is formed in a rectangular plate shape extending in both the x direction and the z direction. The heat transfer member 50 is disposed between a pair of battery modules 30 arranged in the y direction. The heat transfer member 50 is disposed along the outer surface of the bottom wall 32a of the accommodating body 32 in each battery module 30. The heat transfer member 50 has a first opposing surface 50a which is disposed along an outer surface of the bottom wall 32a of the first battery module 30 and faces one side in the y direction, and a second opposing surface 50b which is disposed along an outer surface of the bottom wall 32a of the second battery module 30 and faces the other side in the y direction. The heat transfer member 50 is disposed such that the first opposing surface 50a is in contact with the outer surface of the bottom wall 32a of the first battery module 30 and the second opposing surface 50b is in contact with the outer surface of the bottom wall 32a of the second battery module 30. Both end portions of the heat transfer member 50 in the x direction protrude outward in the x direction more than the four battery modules 30.

The heat radiation member 60 is made of a material having high thermal conductivity. As a material having a high thermal conductivity, a metal material such as aluminum is preferable. The heat radiation member 60 is formed in a rectangular plate shape extending in both the x direction and the y direction. The heat radiation member 60 is disposed at a position facing outer surfaces of the second side walls 32e positioned at an end portion opposite to the first side walls 32b of the accommodating bodies 32 of the four battery modules 30. The heat radiation member 60 is disposed with a gap from the second side walls 32e of the accommodating bodies 32 of the four battery modules 30. The heat radiation member 60 has a heat radiating surface 60a facing outward in the z direction, and an outer edge 60b positioned outside the four battery modules 30 when viewed in the z direction. A through hole 60d penetrating in the thickness direction (the z direction) of the heat radiation member 60 is formed at each corner portion of the heat radiation member 60.

The heat radiation member 60 is connected to the heat transfer member 50 on a back surface 60c opposite to a heat radiating surface 60a. The heat transfer member 50 and the heat radiation member 60 are fastened and fixed by a plurality of (four in the present embodiment) bolts 74. The plurality of bolts 74 are arranged at equal intervals in the x direction. Each bolt 74 is inserted to pass through a through hole penetrating the heat transfer member 50 in the z direction from the inside of a punched portion 71a of the first bracket 71, which will be described later, and is screwed into a female screw formed in the heat radiation member 60.

The first bracket 71 is disposed on a side opposite to the heat radiation member 60 with the heat transfer member 50 interposed therebetween. The first bracket 71 is formed in a rectangular plate shape extending in both the x direction and the y direction. The first bracket 71 is disposed at a position facing the outer surface of the first side wall 32b of the accommodating body 32 of each battery module 30. The first bracket 71 is fixed to each of the battery modules 30 and the heat transfer member 50. The first bracket 71 is fastened to an end face of the heat transfer member 50 using a plurality of (three in the present embodiment) bolts 72 at an intermediate position in the y direction. In addition, the first bracket 71 is fastened to the first side wall 32b of the accommodating body 32 of each battery module 30 using a plurality of (four in the present embodiment) bolts 73. In the first bracket 71, punched portions 71a are formed to avoid portions into which the bolt 72 and the bolt 73 are inserted. A part of the end face of the heat transfer member 50 is exposed through the punched portion 71a.

The four support members 80 are disposed on side portions of the respective battery modules 30. Each support member 80 is fixed to the heat transfer member 50 between a connection site between the heat transfer member 50 and the heat radiation member 60 and a fixing portion between the heat transfer member 50 and the first bracket 71 in the z direction. Each support member 80 is fixed to an end face of the heat transfer member 50 in the x direction. The support member 80 is made of a metallic material such as steel use stainless (SUS). The support member 80 includes a plate-shaped plate portion 81 and a cylindrical bolt guide portion 82.

The plate portion 81 is formed in a flat plate shape along a plane orthogonal to the x direction. The plate portion 81 includes a base portion 81a extending in the z direction, a first extending portion 81b extending from a portion of the base portion 81a on the heat radiation member 60 side in the z direction toward the heat transfer member 50, a second extending portion 81c extending from a portion of the base portion 81a on a side opposite to the first extending portion 81b in the z direction toward the heat transfer member 50. The first extending portion 81b is fastened to an end face of the heat transfer member 50 facing the x direction using bolts 75a. In addition, the first extending portion 81b is fastened by a single bolt 75b to a bracket (not shown) which connects the second side wall 32e of the accommodating body 32 of the first battery module 30 and the plate portion 81. Also, the first extending portion 81b may be directly fastened to the accommodating body 32 of the first battery module 30 using the bolt 75b. The second extending portion 81c is fastened to an end face the heat transfer member 50 facing the x direction by two bolts 75c.

A first bent portion 83 and a second bent portion 84 are formed in the base portion 81a of the plate portion 81. The first bent portion 83 is formed at an end portion of the base portion 81a on the heat radiation member 60 side in the z direction. The first bent portion 83 is bent at a substantially right angle toward the battery module 30. The first bent portion 83 is disposed along the back surface 60c of the heat radiation member 60 and is in contact with the back surface 60c. The second bent portion 84 is formed at an end portion of the base portion 81a opposite to the first bent portion 83 in the z direction. The second bent portion 84 is bent substantially at a right angle toward the battery module 30 side. The second bent portion 84 is disposed at a position protruding in the z direction from the battery module 30, the heat transfer member 50 and the first bracket 71. Through holes 83a and 84a (see also FIG. 9 also) that are coaxial with the through holes 60d formed in the corner portions of the heat radiation member 60 are formed in the first bent portion 83 and the second bent portion 84.

The bolt guide portion 82 is formed in a cylindrical shape and extends along the z direction. The bolt guide portion 82 is provided to extend between the first bent portion 83 and the second bent portion 84. Both end portions of the bolt guide portion 82 are welded to the first bent portion 83 and the second bent portion 84. The bolt guide portion 82 has a through hole 82a penetrating in an axial direction thereof. The through hole 82a is disposed coaxially with the through holes 83a and 84a formed in the first bent portion 83 and the second bent portion 84.

Further, the support member 80 has a fastening member insertion portion 85 through which the elongated bolt 77 (a bolt, see FIG. 3) can be inserted. The fastening member insertion portion 85 is provided at a position separated from the fixing portion between the support member 80 and the heat transfer member 50 in the y direction. The fastening member insertion portion 85 is formed by the bolt guide portion 82, the first bent portion 83 and the second bent portion 84 and extends continuously in the z direction. The fastening member insertion portion 85 is formed to be able to be inserted from a side where the heat radiation member 60 is present toward a side where the first bracket 71 is present. In the present embodiment, the fastening member insertion portion 85 is formed such that the fastening member can be inserted in the z direction. The fastening member insertion portion 85 protrudes in a direction from the heat radiation member 60 toward the first bracket 71 in the z direction more than the battery module 30, the heat transfer member 50 and the first bracket 71.

The second brackets 91 are disposed one by one between the second side wall 32e of the accommodating body 32 of the first battery module 30 and the heat radiation member 60 and between the second side wall 32e of the accommodating body 32 of the second battery module 30 and the heat radiation member 60, respectively. The second bracket 91 has a plate body 92 formed in a rectangular plate shape elongated in the x direction. The plate body 92 is formed such that its length in the x direction substantially coincides with the width of the first battery module 30 in the x direction and the width of the second battery module 30 in the x direction.

The plate body 92 is disposed on the second side wall 32e of each battery module 30 at a position close to the heat transfer member 50. The plate body 92 is fastened to the second side wall 32e of the accommodating body 32 of each battery module 30 using a plurality of (eight in the present embodiment) bolts 93. Also, vertical walls 94 which are bent and extends toward the heat radiation member 60 are integrally formed on both sides of the plate body 92 in a lateral direction thereof. The vertical wall 94 plays a role of enhancing the mechanical strength of the plate body 92 and securing a space for disposing a head portion of the bolt 93 between the plate body 92 and the heat radiation member 60.

Further, tongue piece portions 95 which are bent to extend toward the first bracket 71 side (the side opposite to the heat radiation member 60) are integrally formed on both longitudinal sides of the plate body 92. The tongue piece portion 95 is interposed between a side portion of each battery module 30 and the plate portion 81 of each support member 80. Further, the tongue piece portion 95 is disposed at a position corresponding to the bolt 75b for fastening the plate portion 81 to each battery module 30. As a result, the tongue piece portion 95 is tightened together with the battery module 30 and the plate portion 81 of the support member 80 using the bolt 75b.

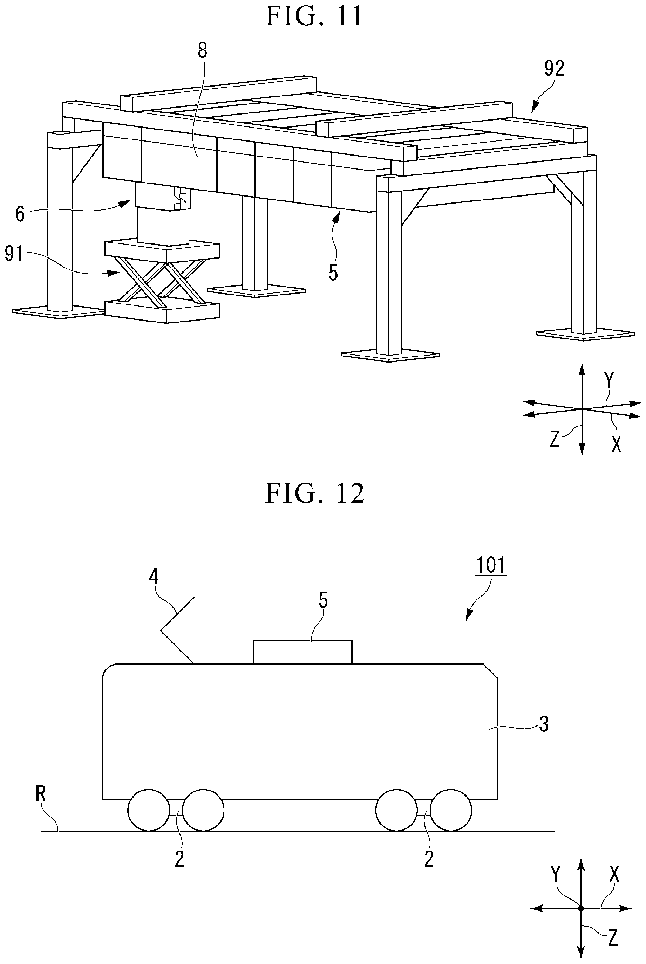

FIG. 11 is a diagram illustrating an assembling method of the vehicle storage battery device according to the first embodiment.

As shown in FIG. 11, when installing the battery unit 6 in the accommodating space S1, the housing 8 is suspended using a suspension frame 92 for assembly, and then the battery unit 6 is lifted using a jack 91 or the like and inserted into the accommodating space S1 through the working opening 20a. At this time, the jack 91 supports the end portion of each fastening member insertion portion 85 on the rail R side in the battery unit 6, that is, the second bent portion 84. Since the end portion of each fastening member insertion portion 85 on the rail R side is formed to be able to receive the load of the battery unit 6 when the battery unit 6 is fixed to the partition member 26, it can be supported by the jack 91.

As described in detail above, the battery unit 6 of the present embodiment includes the battery modules 30, the heat transfer member 50, the heat radiation member 60, the first bracket 71, the support members 80, and the second brackets 91. The battery module 30 includes the accommodating body 32 having the bottom wall 32a with which the cells are in thermal contact. The heat transfer member 50 has the first opposing surface 50a disposed along the outer surface of the bottom wall 32a of the first battery module 30, and the second opposing surface 50b disposed along the outer surface of the bottom wall 32a of the second battery module 30. The heat transfer member 50 is disposed such that the first opposing surface 50a is in contact with the outer surface of the bottom wall 32a of the first battery module 30 and the second opposing surface 50b is in contact with the outer surface of the bottom wall 32a of the second battery module 30. The heat radiation member 60 has the heat radiating surface facing the outside and is connected to the heat transfer member 50 on the back surface 60c opposite to the heat radiating surface 60a.

Further, the support member 80 for supporting the battery module 30 on the heat transfer member 50 includes the plate-shaped plate portion 81 which straddles between the heat transfer member 50 and the battery module 30. In addition, the cylindrical bolt guide portion 82 (the fastening member insertion portion 85) through which the elongated bolt 77 for fastening the battery unit 6 to the partition member 26 is inserted is provided on the support member 80. In other words, the battery unit 6 includes the first bracket 71 which is disposed on the side opposite to the heat radiation member 60 with the heat transfer member 50 interposed therebetween and is fixed to each of the battery module 30 and the heat transfer member 50, the second bracket 91 fixed to each of the battery module 30 and the support member 80, and the support member 80 which has the fastening member insertion portion 85 which the elongated bolt 77 can be inserted through and is fixed to the heat transfer member 50.

With this configuration, the load of the battery module 30 is received by the first bracket 71, the second bracket 91, and the support member 80, and the load is further distributed to the heat transfer member 50 and is received by the elongated bolt 77 and the nut 78. For this reason, in the heat radiation member 60 tightened together with the support member 80 using the elongated bolt 77 and the nut 78, the load does not concentrate on the corner portions (four corners) through which the long bolts 77 of the heat radiation member 60 are inserted. As a result, deformation of the heat radiation member 60 can be suppressed so that the close contact of the heat radiating surface 60a of the heat radiation member 60 with the main surface of the base portion 26a of the partition member 26 on the rail R side can be maintained.

In addition, the bottom wall 32a of the first battery module 30 is brought into close contact with the first opposing surface 50a of the heat transfer member 50 via the first bracket 71 and the support members 80. Further, the bottom wall 32a of the second battery module 30 is brought into close contact with the second opposing surface 50b of the heat transfer member 50 via the first bracket 71 and the support members 80.

In this manner, deformation of the heat radiation member 60 can be suppressed, and each battery module 30 is brought into close contact with the heat transfer member 50. For this reason, the heat of the battery module 30 is efficiently transmitted to the partition member 26 via the heat transfer member 50 and the heat radiation member 60. Therefore, the cooling efficiency of the battery unit 6 can be reliably increased.

Further, since reduction of the contact area between the heat transfer member 50 and the heat radiation member 60 due to the distortion of the heat radiation member 60 generated when the load of each battery module 30 is applied to the connection site between the heat transfer member 50 and the heat radiation member 60 is suppressed, inhibition of heat conduction from the heat transfer member 50 to the heat radiation member 60 is prevented.

Furthermore, since the heat radiation member 60 is connected to the heat transfer member 50 having the opposing surfaces 50a and 50b along the outer surface of the bottom wall 32a of the accommodating body 32, the heat radiation member 60 is disposed at a position exposed to the outside even when the plurality of battery modules 30 are densely arranged to sandwich the heat transfer member 50.

As described above, since a plurality of battery units 6 can be two-dimensionally arranged such that the side surfaces of the heat radiating surfaces 60a of the heat radiation members 60 face each other while securing the cooling capability, the capacity of the vehicle storage battery device 5 in which a plurality of battery units 6 are mounted can be increased and the cooling efficiency can be enhanced. Further, since a plurality of battery units 6 can be arranged with a high density, when placed under the floor of a vehicle, it is possible to cope with lowering of the floor of the vehicle which causes restriction on the arrangement space.

Furthermore, a plurality of fastening member insertion portions 85 are provided at positions separated toward both sides in the y direction from the fixing portion between the support member 80 and the heat transfer member 50. Thus, when the battery unit 6 is disposed such that the plurality of battery modules 30 are positioned vertically below the heat radiation member 60, the load of each battery module 30 applied to the heat transfer member 50 is transmitted from both sides sandwiching the heat transfer member 50 via the support member 80 to the elongated bolt 77 and is supported by the elongated bolt 77. Therefore, it is possible to support and stabilize the battery unit 6 in a well-balanced manner.

Further, the heat radiation member 60 has the outer edge 60b positioned outside the plurality of battery modules 30 as viewed in the z direction. Thus, when the plurality of battery units 6 are two-dimensionally arranged such that the side surfaces of the heat radiating surfaces 60a of the heat radiation members 60 face each other, it is possible to provide a wider heat radiating surface 60a of the heat radiation member 60 as compared to such a configuration in which the outer edge of the heat radiation member is positioned on a more inner side than the plurality of battery modules 30 as viewed in the z direction. Therefore, it is possible to provide the battery unit 6 which can have a larger capacity while securing the cooling capacity, thereby increasing the cooling efficiency.

In addition, the fastening member insertion portion 85 protrudes in the direction from the heat radiation member 60 toward the first bracket 71 more than the plurality of battery modules 30, the heat transfer member 50, and the first bracket 71. Thus, in the case where the battery unit 6 is disposed such that the plurality of battery modules 30 are positioned vertically below the heat radiation member 60, the fastening member insertion portion 85 can be supported by the jack 91 when the battery unit 6 is lifted and installed by the jack 91. Therefore, when the battery unit 6 is installed, it is possible to prevent the entire load of the battery unit 6 from being applied to the battery module 30, the heat transfer member 50, and the first bracket 71.

Further, the support member 80 is provided to straddle between any battery module 30 and the heat transfer member 50, and each of the support members 80 supports the corresponding battery module 30. For this reason, each battery module 30 can be reliably supported by each support member 80.

Furthermore, by supporting each battery module 30 with separate support members 80, the close contact of the bottom wall 32a of each battery module 30 to the opposing surfaces 50a and 50b of the heat transfer member 50 can be enhanced. Therefore, the heat of the battery module 30 can be efficiently transmitted to the heat transfer member 50.

In addition, the support member 80 may be formed to straddle between the first battery module 30 and the second battery module 30 with the two heat transfer members 50 interposed therebetween. Also, one side of each battery module 30 in the x direction may be supported by one support member 80.

Further, the main circuit connector 32c and the control circuit connector 32d are configured to be visible from the side opposite to the heat radiation member 60 in the z direction. As a result, even when the plurality of battery units 6 are two-dimensionally arranged such that the side surfaces of the heat radiating surfaces 60a of the heat radiation members 60 face each other, the connectors 32c and 32d can be disposed so as not to be covered by the heat radiation member 60. Therefore, it is possible to provide the battery unit 6 having excellent workability at the time of connection work.

Meanwhile, for example, in the case where the battery unit is cooled by direct application of cooling air to the battery unit, there is a possibility that dust, moisture and the like may intrude around the battery unit, thereby causing degradation and failure of the battery unit.

The vehicle storage battery device 5 according to the present embodiment is configured such that the battery unit 6 is disposed in the accommodating space S1 which is independent from the external space and the cooling space S2. According to this configuration, since the accommodating space S1 is independent from the external space and the cooling space S2, entry of dust, moisture and the like into the accommodating space S1 is suppressed, whereby deterioration and failure of the battery unit 6 are prevented. Therefore, the reliability of the vehicle storage battery device 5 can be improved.

In addition, if the accommodating space S1 and the high-voltage device space S3 communicate with other spaces, there is a possibility that an unexpected situation occurring in the accommodating space S1 or the high-voltage device space S3 may affect devices disposed in other spaces.

In the present embodiment, since the accommodating space S1 is independent from the external space, the high-voltage device space S3, and the low-voltage device space S4, an unexpected situation such as leakage in the battery unit 6 is prevented from affecting the control device 7 disposed in the high-voltage device space S3 and the low-voltage device space S4 and the outside. In addition, it is possible to prevent the unexpected situation occurring in the high-voltage device space S3 from affecting the battery unit 6 disposed in the accommodating space S1. Therefore, the reliability and safety of the vehicle storage battery device 5 can be improved.

Since the heat radiating surface 60a of the heat radiation member 60 of the battery unit 6 is in contact with the partition member 26 which separates the accommodating space S1 from the cooling space S2 and makes them independent of each other, the heat radiation member 60 is cooled via the partition member 26 by cooling the partition member 26 with the cooling air flowing through the cooling space S2. Therefore, it is possible to cool the battery unit 6 disposed in the accommodating space S1 independent from the cooling space S2.

Further, since the battery unit 6 is fixed using the long bolt 77 inserted in the fastening member insertion portion 85, when the battery unit 6 is installed such that the plurality of battery modules 30 are positioned vertically below the heat radiation member 60, the load of the battery module 30 is inhibited from being applied to the heat radiation member 60 through the heat transfer member 50, as described above. Thus, inhibition of the heat conduction from the heat transfer member 50 to the heat radiation member 60 is prevented. Therefore, the cooling capacity for the battery unit 6 can be secured.

Also, since the battery unit 6 is fixed and arranged side by side with the partition member 26 in the state described above, it is possible to arrange the battery units 6 with a high density while enabling cooling of the battery unit 6, whereby it is possible to provide a vehicle storage battery device 5 capable of achieving a larger capacity and increasing the cooling efficiency.

In addition, the fastening member insertion portion 85 and the heat radiation member 60 are fastened together with the partition member 26 using the elongated bolt 77. Thus, the heat radiation member 60 is firmly fixed to the partition member 26. Therefore, since the state where the heat radiation member 60 is in contact with the partition member 26 is maintained, the heat radiation member 60 can be reliably cooled through the partition member 26.

Further, the fastening member insertion portion 85 extends continuously in the z direction. For this reason, the fastening member insertion portion 85 is prevented from being bent due to a fastening force in the z direction generated when the elongated bolt 77 and the nut 78 are tightened. Therefore, it is possible to inhibit the fastening force when the elongated bolt 77 and the nut 78 are tightened from being absorbed in the fastening member insertion portion 85. Therefore, the battery unit 6 and the partition member 26 can be firmly fixed.

Also, the accommodating space S1 is formed to be openable on the side opposite to the partition member 26 with the battery unit 6 interposed therebetween. Thus, when viewed from the external space in a state where the cover member 24 is detached, the battery unit 6 is disposed in the accommodating space S1 with the battery unit 6 not covered by the partition member 26. Therefore, it is possible to easily perform the work on the battery unit 6 from the external space, whereby a vehicle storage battery device 5 having excellent workability for the battery unit 6 can be obtained.

Furthermore, the accommodating space S1 is formed to be openable on the side opposite to the partition member 26 with the battery unit 6 interposed therebetween. In this war, when the battery unit 6 is installed in the accommodating space S1, the battery unit 6 can be directly inserted from the external space into the accommodating space S1 with the cover member 24 removed. At that time, it is possible to perform both the operation of inserting the battery unit 6 into the accommodating space S1 from the end portion where the heat radiation member 60 is positioned in the battery unit 6 and the operation of bringing the heat radiation member 60 into contact with the partition member 26 at the same time. This also applies to the case of detaching the battery unit 6. Therefore, workability can be improved.

Also, in the present embodiment, in the vehicle height direction Z, the partition member 26 is disposed at a position close to the vehicle body 3 in the accommodating space S1 and the cover member 24 is disposed at a position close to the rail R. For this reason, when the battery unit 6 is installed in the accommodating space S1, it is possible to lift the heavy battery unit 6 with the jack 91 or the like. Therefore, workability can be improved as compared with a case where the battery unit 6 is inserted into the accommodating space in a horizontal direction.

In addition, since the low-voltage devices 7b are separated from the high-voltage device space S3 in which the high-voltage devices 7a are disposed, and are disposed in the low-voltage device space S4 positioned on the side opposite to the high-voltage device space S3 with the longitudinal direction of the housing 8 interposed therebetween, it is possible to prevent an operator from touching the high-voltage devices 7a during maintenance of the low-voltage devices 7b. Therefore, workability can be improved.

Further, in the present embodiment, since the high-voltage device space S3 and the low-voltage device space S4 are disposed on both sides in the vehicle width direction Y with respect to the accommodating space S1, the operator can work from a side of the electric locomotive 1 at the time of maintenance of the high-voltage devices 7a and the low-voltage devices 7b. Therefore, workability can be improved.

### (Second embodiment)

FIG. 12 is a schematic side view of an electric locomotive according to a second embodiment.

Here, in the electric locomotive 1 of the first embodiment shown in FIG. 1, the vehicle storage battery device 5 is disposed under the floor of the vehicle body 3. In contrast, an electric locomotive 101 of the second embodiment shown in FIG. 12 is different from the first embodiment in that the vehicle storage battery device 5 is disposed on the top plate of the vehicle body 3. In this case, the vehicle storage battery device 5 is turned upside down as in the first embodiment, and the aforementioned hanging ears 27 are fastened to the top plate of the vehicle body 3. In this way, when the battery unit 6 is installed in the accommodating space S1, it is possible to suspend the heavy battery unit 6 with a crane or the like. For this reason, workability can be improved as compared with a case where the battery unit 6 is inserted into the accommodating space from the horizontal direction.

Also, in each of the embodiments described above, the cooling space S2 communicates with the external space through the ventilation openings 20b and 20c formed on both sides in the vehicle width direction Y, but the present invention is not limited thereto. The cooling space may communicate with the external space through the ventilation openings formed in both side portions of the main body portion of the housing in the vehicle traveling direction X, respectively. In this way, the traveling wind can be taken into the cooling space and the fan can be omitted. In this case, it is desirable that the fins of the partition member extend in the vehicle traveling direction X. As a result, in the cooling space, the cooling air flows in the vehicle traveling direction X, and the partition member can be efficiently cooled.

Also, in each of the embodiments described above, the partition member 26 and the heat radiation member 60 are formed as separate members, but they may be integrally formed. That is, the heat radiation member may also serve as the partition member. In this case, it is desirable to form fins on the heat radiation member. Also, the partition member may not have fins.

Also, in each of the embodiments described above, the battery unit 6 is installed in a state in which the x direction coincides with the vehicle traveling direction X, the y direction coincides with the vehicle width direction Y, and the z direction coincides with the vehicle height direction Z, but the present invention is not limited thereto. For example, the battery unit 6 may be mounted in a state in which the x direction coincides with the vehicle width direction Y, the y direction coincides with the vehicle traveling direction X, and the z direction coincides with the vehicle height direction Z.

According to at least one embodiment described above, a battery unit includes a battery module, a heat transfer member, a heat radiation member, a first bracket, a support member, and a second bracket. The battery module includes an accommodating body having a bottom wall with which cells are in thermal contact. The heat transfer member has a first opposing surface disposed along an outer surface of a bottom wall of a first battery module and a second opposing surface disposed along an outer surface of a bottom wall of a second battery module. The heat transfer member is disposed such that the first opposing surface is in contact with the outer surface of the bottom wall of the first battery module and the second opposing surface is in contact with the outer surface of the bottom wall of the second battery module. The heat radiation member has a heat radiating surface facing outward and is connected to the heat transfer member on a back surface opposite to the heat radiating surface.

In addition, the support member for supporting the battery module on the heat transfer member includes a plate-shaped plate portion which straddles between the heat transfer member and the battery module. Further, a cylindrical bolt guide portion (a fastening member insertion portion) through which an elongated bolt for fastening the battery unit to the partition member is inserted is provided on the support member.

In other words, the battery unit includes a first bracket which is disposed on a side opposite to the heat radiation member with the heat transfer member interposed therebetween and is fixed to each of the battery module and the heat transfer member, a second bracket fixed to each of the battery module and the support member, and a support member which has a fastening member insertion portion which the elongated bolt can be inserted through and is fixed to the heat transfer member.

With this configuration, the load of the battery module is received by the first bracket, the second bracket, and the support member, and the load is further distributed to the heat transfer member and is received by the elongated bolt and the nut. For this reason, by using the elongated bolt and the nut, the load does not concentrate on corner portions (four corners) through which the elongated bolts of the heat radiation member are inserted in the heat radiation member fastened together with the support member. As a result, deformation of the heat radiation member can be suppressed so that the close contact of the heat radiating surface of the heat radiation member to the main surface of the base portion of the partition member on the rail R side can be maintained.

Also, the bottom wall of the first battery module is brought into close contact with the first opposing surface of the heat transfer member via the first bracket and the support member. Furthermore, the bottom wall of the second battery module is brought into close contact with the second opposing surface of the heat transfer member via the first bracket and the support member.

In this way, deformation of the heat radiation member can be suppressed, and each battery module is brought into close contact with the heat transfer member. For this reason, the heat of the battery module is efficiently transmitted to the partition member via the heat transfer member and the heat radiation member. Therefore, the cooling efficiency of the battery unit can be reliably increased.

In addition, since reduction of the contact area between the heat transfer member and the heat radiation member due to the distortion of the heat radiation member generated when the load of each battery module is applied to the connection site between the heat transfer member and the heat radiation member is suppressed, inhibition of heat conduction from the heat transfer member to the heat radiation member is prevented.

Further, since the heat radiation member is connected to the heat transfer member having the opposing surfaces along the outer surface of the bottom wall of the accommodating body, the heat radiation member is disposed at a position exposed to the outside even when the plurality of battery modules are densely arranged to sandwich the heat transfer member.

As described above, since a plurality of battery units can be two-dimensionally arranged such that the side surfaces of the heat radiating surfaces of the heat radiation members face each other while securing the cooling capability, the capacity of the vehicle storage battery device in which a plurality of battery units are mounted can be increased and the cooling efficiency can be enhanced. Also, since a plurality of battery units can be arranged with a high density, when placed under the floor of a vehicle, it is possible to cope with lowering of the floor of the vehicle which causes restriction on the arrangement space.

Furthermore, the support member is provided to straddle between any battery module and the heat transfer member, and each of the support members supports the corresponding battery module. For this reason, each battery module can be reliably supported by each support member. Moreover, by supporting each battery module with separate support members, the close contact of the bottom wall of each battery module to the opposing surfaces of the heat transfer member can be enhanced. Therefore, the heat of the battery module can be efficiently transmitted to the heat transfer member.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the inventions. The accompanying claims and their equivalents are intended to cover such forms or modifications as would fall within the scope of the inventions.

## Claims

1. A battery unit comprising:
a plate-shaped heat radiation member which has one surface attached to a heat radiating portion;
a plate-shaped heat transfer member which has one end provided to come into contact with the other surface of the heat radiation member, is provided to extend in a direction intersecting a surface direction of the heat radiation member, and has a first opposing surface and a second opposing surface that are opposite to each other;
first battery modules having first side surfaces which contact the first opposing surface of the heat transfer member;
second battery modules having second side surfaces which contact the second opposing surface of the heat transfer member;
a first bracket which connects the other end opposite to the one end of the heat transfer member, first end faces of the first battery modules facing the same direction as the other end of the heat transfer member, and second end faces of the second battery modules facing the same direction as the first end faces of the first battery modules;
a first support member which connects a third side surface of the heat transfer member which is different from the first opposing surface, the second opposing surface, the one end, and the other end of the heat transfer member, and a fourth side surface of the first battery modules facing the same direction as the third side surface;
a second support member which connects the third side surface of the heat transfer member and a fifth side surface of the second battery modules facing the same direction as the third side surface, and
fastening member insertion portions which are provided on a first side portion of the first support member on a side opposite to the heat transfer member and a second side portion of the second support member on a side opposite to the heat transfer member, are provided to extend in the same direction as the extending direction of the heat transfer member, and have first through holes penetrating in the extending direction,
wherein the heat radiation member has second through holes formed to penetrate in a thickness direction thereof and communicate with the first through holes at positions corresponding to the first through holes of the fastening member insertion portions, and
fastening members are inserted through the first through hole and the second through hole, whereby the heat radiation member and the fastening member insertion portions are fixed to the heat radiating portion.

2. The battery unit according to claim 1,
wherein two first bent portions that are bent and extend from the first support member are provided at both end portions of the fastening member insertion portion in the extending direction on the first side portion of the first support member,
two second bent portions that are bent and extend from the second support member are provided at both end portions of the fastening member insertion portion in the extending direction on the second side portion of the second support member,
the respective fastening member insertion portions extend between the two first bent portions and extend between the two second bent portions,
third through holes communicating with the first through holes are formed in the first bent portions and the second bent portion at positions corresponding to the first through holes of the fastening member insertion portion, and
the respective fastening members are inserted through the first through holes, the second through holes, and the third through holes to fix the heat radiation member, the fastening member insertion portions, the first support member, and the second support member to the heat radiating portion.

3. The battery unit according to claim 1 or 2,
wherein two first battery modules are arranged side by side along the first opposing surface of the heat transfer member and along the other surface of the heat radiation member, and
two second battery modules are arranged side by side along the second opposing surface of the heat transfer member and along the other surface of the heat radiation member,
the battery unit further comprising:
a second bracket which connects fourth end faces of the two first battery modules on the heat radiation member side, and is interposed between the third side surface of the first battery modules and the first support member, and
a third bracket which connects fifth end faces of the two second battery modules on the heat radiation member side, and is interposed between the fifth side surface of the second battery modules and the second support member.

4. The battery unit according to any one of claims 1 to 3, wherein, when viewed in a direction in which each of the first battery modules and the second battery modules and the heat radiation member are arranged, the heat radiation member has an outer edge positioned further outward than the first battery modules and the second battery modules.

5. The battery unit according to any one of claims 1 to 4, wherein the fastening member insertion portion protrudes from the heat radiation member more than the first bracket.

6. The battery unit according to any one of claims 1 to 5,
wherein each of the first battery modules and the second battery modules has a connection portion electrically connected to an external device, and
the connection portion is visible from a side opposite to the heat radiation member across each of the first battery modules and the second battery modules.

7. A vehicle storage battery device comprising:
the battery unit according to any one of claims 1 to 6; and
a control device for controlling the battery unit,
wherein the battery unit is disposed in an accommodating space that is independent from an external space, a control device space in which the control device is disposed, and a cooling space through which cooling air for cooling the heat radiation member flows.

8. The vehicle storage battery device according to claim 7, further comprising:
a partition member which partitions the accommodating space from the cooling space and makes them independent from each other; and
the plurality of battery units,
wherein the one surface of the heat radiation member is in contact with the partition member, and
the plurality of battery units are fixedly arranged on the partition member using the fastening members inserted through the fastening member insertion portions.

9. The vehicle storage battery device according to claim 8, wherein the fastening member insertion portions and the heat radiation member are fastened to the partition member together using the fastening members.

10. The vehicle storage battery device according to claim 8 or 9, wherein the accommodating space is formed to be openable on a side opposite to the partition member with the battery units interposed therebetween.

11. The vehicle storage battery device according to any one of claims 7 to 10, further comprising:
a housing for holding the battery units and the control device,
wherein the control device includes a high-voltage device and a low-voltage device, and
in the control device space, the low-voltage device is disposed in a low-voltage device space which is separated from a high-voltage device space in which the high-voltage device is disposed and positioned on a side opposite to the high-voltage device space with a longitudinal direction of the housing interposed therebetween.
